# EUROPÄISCHE PATENTSCHRIFT

(11) **EP 0 662 446 B1**
(45) Veröffentlichungstag und Bekanntmachung des Hinweises auf die Patenterteilung: **25.11.1998**
(21) Anmeldenummer: 94106716.7
(22) Anmeldetag: 29.04.1994
(51) Int. Cl.: B66F 11/04, B60G 3/14, B60G 3/20, B60G 9/02

(54) **Fahrgestell für eine selbstfahrende Hubarbeitsbühne**
Chassis for a self-propelled aerial working platform
Châssis pour une plate-forme aérienne de travail auto-mobile

(30) Priorität: 07.01.1994 DE 9400202 U
(43) Veröffentlichungstag der Anmeldung: 12.07.1995
(73) Patentinhaber: Begemann, Dirk, D-38108 Braunschweig (DE)
(72) Erfinder: Begemann, Dirk, D-38108 Braunschweig (DE)
(74) Vertreter: Patentanwälte Dipl.-Ing. Bodo Thielking Dipl.-Ing. Otto Elbertzhagen

(56) Entgegenhaltungen:
- WO-A-83/00642
- WO-A-92/04515
- FR-A- 1 227 650
- FR-A- 2 314 067
- FR-A- 2 504 107
- US-A- 3 831 965

## Beschreibung

Die Erfindung bezieht sich auf ein Fahrgestell für eine selbstfahrende Hubarbeitsbühne mit einem eine Arbeitsplattform tragenden Hubwerk, wie einem Gelenkmast, einer Scherenhubvorrichtung oder dergleichen, welches die Arbeitsplattform parallel zu einer Bezugsebene, in Normallage zu einer Horizontalebene, hält, ferner mit Vorderrädern und Hinterrädern sowie einem Achs-Querträger, an dem die Vorderräder gelagert sind und der um eine in Fahrgestellängsrichtung liegende Achse schwenkbar sowie in seinen Schwenkpsotionen festlegbar ist.

Ein solches Fahrgestell ist aus der WO-A-92/04515 bekannt. Die Manövrierfähigkeit dieses Gerätes ist mangels Lenkbarkeit der Räder begrenzt, außerdem kann ein Geländeausgleich nur beschränkt vorgenommen werden, weil allein der Vorderachs-Querträger um eine in Längsrichtung des Fahrgestells liegende Achse verschwenkbar ist. Dies kann bei einem Fahrgestell der bekannten Art ausreichend sein, weil darauf der die Arbeitsplattform tragende Gelenkträger kardanisch beweglich angeordnet ist, weswegen ein weiterer Neigungsausgleich der Arbeitsplattform gegenüber dem Fahrgestell durch Neigungsverstellung des Gelenkmastes vorgenommen werden kann.

Die FR-A-25 04 107 beschreibt einen Gabelstapler mit einer vorderseitig vorstehenden, höhenverfahrbaren Hubgabel, für dessen spezielle Manövrierfähigkeit die Hinterräder lenkbar sind. Damit je nach Belastung des Gerätes durch die Last auf der Hubgabel und durch das am rückwärtigen Ende erforderliche Gegengewicht beim Fahrbetrieb die optimale Neigung der Hubgabel gegenüber der Fahrebene eingestellt werden kann, sind hier die lenkbaren Hinterräder auch noch höhenverstellbar. Auf die Nivellierung eines solchen Gerätes kommt es nicht an, da es in der Regel auf einer horizontalen oder nur schwach geneigten Fahrebene bewegt wird.

Der Erfindung liegt die Aufgabe zugrunde, ein Fahrgestell der gattungsgemäßen Art zu schaffen, das gut manövrierfähig ist und bei dem eine Höhenverstellung aller Räder zur Nivellierung der Hubarbeitsbühne bei notwendigem Geländeausgleich vorgenommen werden kann.

Diese Aufgabe wird bei einem Fahrgestell der gattungsbildenden Art dadurch gelöst, daß die Vorderräder an dem schwenkbaren Achsträger lenkbar sind und die Hinterräder einzeln an Lenkern je für sich mittels Hilfsantrieben höhenverstellbar angeordnet sind.

Für die Erfindung ist wesentlich, daß die beiden Vorderräder an einem pendelnd aufgehängten Vorderachs-Querträger angeordnet sind, der gegenüber dem die Arbeitsplattform tragenden Gestell Schrägstellungen einnehmen kann. So kann das eine Vorderrad höher und das andere Vorderrad tiefer als eine durch die Zentren dieser Räder in der Normallage hindurchgehende Horizontalebene liegen. Die beiden einzeln aufgehängten Hinterräder sind je für sich höhenjustierbar, so daß man die Nivellierung des Fahrgestells auf eine Horizontalausrichtung der Arbeitsplattform am besten vornimmt, indem man bei freigegebener Schwenkbarkeit des Vorderachs-Querträgers über die für die Höhenverstellung der Hinterräder erforderlichen Hilfsantriebe den Geländeausgleich vornimmt und danach den Vorderachs-Querträger gegen eine weitere Verschwenkbarkeit verriegelt.

In vorteilhafter Ausbildung nach der Erfindung lenkt man am Vorderachs-Querträger einen gestellfest gegengelagerten, doppelt wirkenden Hydraulikzylinder an, der über Ventile sperrbar sowie entsperrbar ist und die Verriegelungsvorrichtung des Vorderachs-Querträgers bildet. Unabhängig davon kann dieser Hydraulikzylinder auch als Verstellantrieb für die Verschwenkung des Vorderachs-Querträgers genutzt werden, wofür eine entsprechende Hydrauliksteuerung vorgesehen wird. Die Höhenverstellvorrichtungen der Hinterräder bestehen bevorzugt aus an den Lenkern angreifenden, gestellfest gegengelagerten Hydraulikzylindern, die zweckmäßig ebenfalls als doppelt wirkende Zylinder ausgebildet sind, so daß die Hinterräder des Fahrgestells je für sich auf- und abverstellt werden können.

Um bei nachgebendem Untergrund am Aufstellungsort der Hubarbeitsbühne eine Warnung zu geben oder eine Sperrung des Hubwerks zu veranlassen, sind vorteilhaft der Hydraulikzylinder für den Vorderachs-Querträger und die Hydraulikzylinder für die Lenker der Hinterräder mit Drucksensoren ausgestattet, von denen ein Alarm- oder Stellsignal dann ausgelöst wird, wenn infolge Absackens eines der Vorderräder oder Hinterräder eine entsprechende Druckentlastung eintritt.

Die Lenker zur Aufhängung der Hinterräder können unterschiedlich ausgebildet sein. Für eine kompakte Bauform können die Lenker als um in Fahrgestell-Längsrichtung liegende Achsen schwenkbare Querlenker gestaltet sein, bei denen man Spur- und gegebenenfalls Sturzveränderungen beim Verstellen beachten muß. Sturzänderungen lassen sich dann zumindest weitgehend vermeiden, wenn die Querlenker der Hinterräder als Doppelquerlenker gestaltet sind. In anderer Ausführung bildet man die Lenker als um in Fahrgestell-Querrichtung liegende Achsen schwenkbare Längslenker aus, mit denen sich größere Höhenverstellhübe ohne Sturzänderungen der Räder verwirklichen lassen.

Des weiteren ist es bei dem erfindungsgemäßen Fahrgestell zweckmäßig, die Auflagerstelle des Hubwerks zu den Hinterrädern hin zu verlagern, so daß sie zu den Hinterädern einen geringeren Abstand als zu den Vorderrädern hat. Dadurch werden infolge Schwerpunktverlagerung die Vorderräder und der Vorderachs-Querträger im Verhältnis zu den Hinterrädern weniger belastet, so daß sich bei einer Höhenverstellung der Hinterräder der gelöste, schwenkbare Vorderachs-Querträger problemlos selbsttätig nachführen läßt.

Die Standsicherheit des Fahrgestells und damit der gesamten Hubarbeitsbühne wird dadurch begünstigt, daß man die Spurweiten der Hinterräder und der Vorderräder - zumindest in der Normallage betrachtet - im wesentlichen gleich und ausreichend groß macht.

Damit bei jeder Auslenkung der Räder des Fahrgestells die Kippsicherheit des gesamten Gerätes gewährleistet ist, liegen die Vorderräder und die Hinterräder in jeder Lage außerhalb der Vertikalprojektion der Arbeitsplattform. Entsprechend ist der Radstand, also der Abstand zwischen den Vorder- und den Hinterrädern und die Spurweite sowohl der Vorderräder als auch der Hinterräder gewählt, die insbesondere in der Normallage deutlich über den Umriß der Arbeitsplattform einschließlich dem Hubwerk hervorstehen, der sich in der vertikalen Projektion auf die Aufstandsfläche des Fahrgestells ergibt.

Da das Fahrgestell einer selbstfahrenden Hubarbeitsbühne angetrieben werden muß, dennoch vom Antrieb die Höhenverstellung möglichst wenig beeinträchtigt werden soll, werden vorteilhaft die beiden einzeln aufgehängten, höhenverstellbaren Hinterräder mittels integrierter Radmotoren, die in den Radnaben untergebracht werden können, angetrieben.

Die Erfindung wird nachfolgend anhand der Zeichnung an Ausführungsbeispielen noch näher erläutert. Dabei zeigen:
- Fig. 1: in schematischer perspektivischer Ansicht ein Fahrgestell für eine selbstfahrende Hubarbeitsbühne mit an Längslenkern einzeln aufgehängten Hinterrädern und
- Fig. 2: in gleicher Darstellung ein Fahrgestell mit an Querlenkern einzeln aufgehängten Hinterrädern.

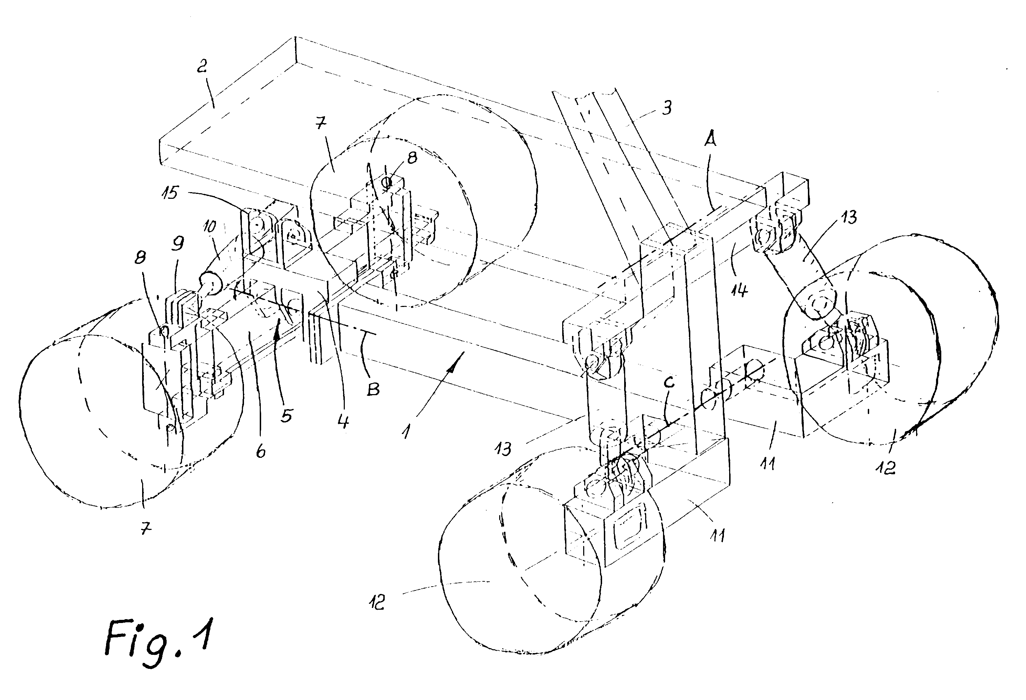

Im einzelnen erkennt man in Figur 1 ein Vierrad-Fahrgestell, welches ein tragendes Gestell 1 in Gestalt fest miteinander verbundener Träger aufweist. Darauf ist eine unterhalb einer Verkleidung 2 ein Hubwerk aufgelagert. Im vorliegenden Fall wird das Hubwerk durch einen Hub- oder Gelenkmast 3 gebildet, der zum rückwärtigen Ende des Gestells 1 hin angelenkt und um die in Fahrgestell-Querrichtung liegende Achse A schwenkbar ist. Der Gelenkmast 3 trägt eine nicht dargestellte Arbeitsplattform, deren Bodenebene in der Gebrauchslage unabhängig von der Höhenposition horizontal liegen soll. Das kann nur erreicht werden, wenn die mit dem Gestell 1 verbundene Achse A horizontal ausgerichtet ist.

Das Fahrgestell hat eine Längsrichtung, die sich mit der Geradeaus-Fahrtrichtung deckt. Am Vorderende des in Fahrgestell-Längsrichtung liegenden Hauptträgers des Gestells 1 ist ein Gelenkkörper 4 angeordnet, der ein Schwenkgelenk 5 aufnimmt, über das ein Vorderachs-Querträger 6 mit dem Gestell 1 so verbunden ist, daß er gegenüber der in der Gebrauchslage horizontal zu haltenden Ebene durch die Achse A hindurch Schräglagen einnehmen kann. Die Schwenkachse B, um die der Vorderachs-Querträger 6 pendeln kann, liegt in der Fahrgestell-Längsrichtung; denkbar ist auch, diese Achse zumindest um einen begrenzten Winkel verdrehen zu können, was allerdings voraussetzt, daß der Gelenkkörper 4 an einem Drehschemel angeordnet ist. Am Ende des Vorderachs-Querträgers 6 sind lenkbare Vorderräder 7 gelagert, die um eine in der Normallage vertikal verlaufende Achse 8 schwenkbar sind. Infolge der pendelnden Aufhängung des Vorderachs-Querträgers 6 können die Vorderräder 7 aus der in der Normallage niveaugleichen Anordnung heraus wechselseitig angehoben oder abgesenkt werden, um sich Geländeunebenheiten am Aufstellungsort des Gerätes anpassen zu können.

Der Vorderachs-Querträger 6 kann dazu entweder zwangsverstellt werden oder in loser Schwenkanordnung einer Ausrichtung des Fahrgestells nachgeben, auf jeden Fall ist er in jeder Schwenkposition gegenüber dem Gestell 1 verriegelbar. Hierzu dient ein doppelt wirkender Hydraulikzylinder 10, der einerseits an einem Lagerbock 9 auf dem Vorderachs-Querträger 6 nahe einem der Vorderräder 7 und andererseits an einem Lagerkörper 15 oben auf dem gestellfesten Gelenkkörper 4 angelenkt ist. Wird der Hydraulikzylinder 10 ausgefahren, senkt sich das in der Zeichnung links dargestellte Vorderrad 7 ab, entsprechend hebt sich das in der Darstellung rechts wiedergegebene Vorderrad 7 an, in umgekehrter Betätigungsfolge, also beim Einfahren des Hydraulikzylinders 10, der entsprechend doppelt wirkend ausgebildet ist, senkt sich das in der Darstellung rechts abgebildete Vorderrad 7 ab, während das in der Darstellung links zu sehende Vorderrad 7 angehoben wird. Die Verschwenkung der Vorderräder 7 erfolgt um die Achse B, um die der Vorderachs-Querträger 6 pendeln kann. Der doppelt wirkende Hydraulikzylinder 10 wird durch entsprechende Ventile hydraulisch verriegelt, sobald bestimmungsgemäß die Verschwenkung des Vorderachs-Querträgers 6 blockiert sein soll.

Am rückwärtigen Ende des Gestells 1 sitzen zwei, zueinander spiegelbildlich nach außen abgewinkelte Längslenker 11, die um eine quer zur Fahrgestell-Längsrichtung liegende Achse C verschwenkbar sind. Am Ende dieser Längslenker 11 sind Hinterräder 12 mit integrierten Radmotoren gelagert, die den Fahrantrieb des Fahrgestells besorgen. Die Abstützung der schwenkbaren Längslenker 11 am Gestell 1 erfolgt über Hydraulikzylinder 13, die ebenfalls zweckmäßig doppelt wirkend ausgebildet sind und über die die einzeln aufgehängten Hinterräder 12 je für sich auf- und abgesenkt werden können. Hierbei schwenken die Hinterräder 12 auf einer Kreisbahn, deren Zentrum in der Schwenkachse C für die Längslenker 11 liegt.

Die notwendige Ausrichtung der Gestellplatte 2 in die Horizontallage bei ungleichmäßigem Gelände am Aufstellungsort geschieht bevorzugt dadurch, daß die Schwenkbarkeit des Vorderachs-Querträgers 6 freigegeben und dann die Hinterräder 12 des Fahrgestells je für sich auf die passende Höhe gebracht werden. Danach wird die Verschwenkbarkeit der Längslenker 11 für die Hinterräder 12 und den Vorderachs-Querträgers 6 durch Blockieren der Hydraulikzylinder 10 und 13 aufgehoben.

Sollte nachfolgend eines der Vorderräder 7 oder Hinterräder 12 absacken, träte auf der betreffenden Seite des doppelt wirkenden Kolbens im Hydraulikzylinder 10 für den Vorderachs-Querträger 6 oder in dem betreffenden Hydraulikzylinder 13 für das absackende Hinterrad 12 eine Druckentlastung auf, die durch einen Drucksensor erfaßt wird. Durch das Signal des jeweiligen Drucksensors wird entweder ein Alarm ausgelöst oder sofort jede weitere Betätigung des Hubwerks 3 gesperrt.

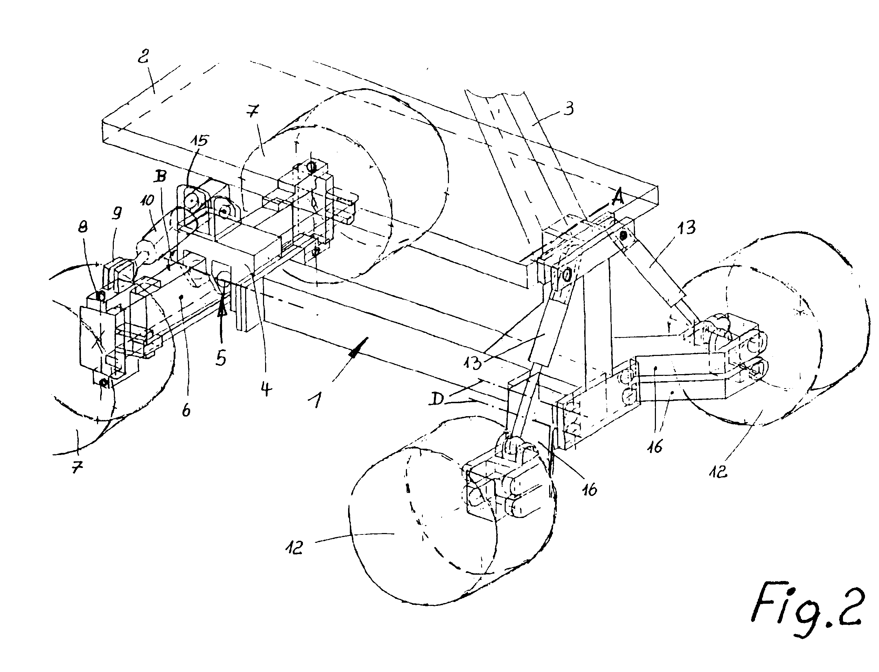

Figur 2 zeigt ein Fahrgestell, das vom Prinzip der Höhenverstellbarkeit der Vorderräder 7 und der Hinterräder 12 her mit dem Fahrgestell nach Figur 1 gleich ist. Insoweit sind in Figur 2 gleiche Teile des Fahrgestells mit denen des Fahrgestells nach Figur 1 mit identischen Bezugsziffern bezeichnet. Lediglich die Hinterräder des Fahrgestells nach Figur 2 sind an Querlenkern 16 einzeln aufgehängt, die als Doppelquerlenker ausgebildet sind. Diese Querlenker 16 sind um Achsen D schwenkbar, die in Fahrgestell-Längsrichtung liegen. Im übrigen stützen sich auch hier die Querlenker 16 über Hydraulikzylinder 13 am Gestell 1 ab, über die die Höhenverstellung der Hinterräder 12 einzeln vorgenommen werden kann. Das gesamte Gerät kann mit einer Nivellierungsautomatik ausgestaltet sein, welche die Horizontallage der Arbeitsplattform durch Verstellung der Hinterräder 12 mit Nachführen der Vorderräder 7 in Abhängigkeit von Signalen eingebauter Neigungsgeber selbsttätig einstellt.

## Patentansprüche

1. Fahrgestell für eine selbstfahrende Hubarbeitsbühne mit einem eine Arbeitsplattform tragenden Hubwerk, wie einem Gelenkmast (3), einer Scherenhubvorrichtung oder dergl., welches die Arbeitsplattform parallel zu einer Bezugsebene, in Normallage zu einer Horizontalebene, hält, ferner mit Vorderrädern (7) und Hinterrädern (12) sowie einem Achs-Querträger (6), an dem die Vorderräder (7) gelagert sind und der um eine in Fahrgestellängsrichtung liegende Achse (B) schwenkbar sowie in seinen Schwenkpositionen festlegbar ist,
dadurchgekennzeichnet,
daß die Vorderräder (7) an dem schwenkbaren Achs-Querträger (6) lenkbar und die Hinterräder (12) einzeln an Lenkern (11, 16) je für sich mittels Hilfsantrieben (13) höhenverstellbar angeordnet sind.

2. Fahrgestell nach Anspruch 1,
dadurch gekennzeichnet,
daß am Vorderachs-Querträger (6) ein gestellfest gegengelagerter, doppelt wirkender Hydraulikzylinder (10) angelenkt ist, der über Ventile sperrbar sowie entsperrbar ist und die Verriegelungsvorrichtung des Vorderachs-Querträgers (6) bildet.

3. Fahrgestellt nach Anspruch 1 oder 2,
dadurch gekennzeichnet, daß die Höhenverstellvorrichtungen der Hinterräder (12) aus den den Lenkern (11, 16) angreifenden, gestellfest gegengelagerten Hydraulikzylindern bestehen.

4. Fahrgestell nach Anspruch 2 und 3,
dadurch gekennzeichnet,
daß der Hydraulikzylinder (10) für den Vorderachs-Querträger (6) und die Hydraulikzylinder (13) für die Lenker (11, 16) der Hinterräder (12) mit Drucksensoren ausgestattet sind, von denen ein Alarm- oder Stellsignal dann ausgelöst wird, wenn infolge Absackens eines der Vorderräder (7) oder der Hinterräder (12) eine entsprechende Druckentlastung eintritt.

5. Fahrgestell nach einem der Ansprüche 1 bis 4,
dadurch gekennzeichnet,
daß die Lenker um in Fahrgestellängsrichtung liegende Achsen (D) schwenkbare Querlenker sind.

6. Fahrgestell nach Anspruch 5,
dadurch gekennzeichnet,
daß die Querlenker (16) jeweils als Doppelquerlenker ausgebildet sind.

7. Fahrgestell nach einem der Ansprüche 1 bis 4,
dadurch gekennzeichnet,
daß die Lenker um in Fahrgestellquerrichtung liegende Achsen (C) schwenkbare Längslenker (11) sind.

8. Fahrgestell nach einem der Ansprüche 1 bis 7,
dadurch gekennzeichnet,
daß die Auflagerstelle des Hubwerks (3) zu den Hinterrädern (12) einen geringeren Abstand als zu den Vorderrädern (7) hat.

9. Fahrgestell nach einem der Ansprüche 1 - 8,
dadurch gekennzeichnet,
daß die Spurweiten der Hinterräder (12) und der Vorderräder (7) zumindest in der Normallage im wesentlichen gleich sind.

10. Fahrgestell nach einem der Ansprüche 1 - 9,
dadurch gekennzeichnet,
daß die Vorderräder (7) und die Hinterräder (12) in jeder Lage außerhalb der Vertikalprojektion der Arbeitsplattform liegen.

11. Fahrgestell nach einem der Ansprüche 1 - 10,
dadurch gekennzeichnet,
daß die einzeln aufgehängten, höhenverstellbaren Hinterräder (12) mittels Radmotoren antreibbar sind.

## Claims

1. Chassis for a self-propelled aerial working platform with a lift mechanism, such as articulated mast (3), scissor lift device or the like, supporting a working platform and holding the platform parallel to a reference plane in a position perpendicular to a horizontal plane, furthermore with front wheels (7) and back wheels (12) as well as an axle cross support (6) on which the front wheels (7) are mounted and which is able to swivel about an axis (B) lying in the longitudinal direction of the chassis and can be fixed in its swivel positions, characterised in that the front wheels (7) are mounted for steering on the swivel axle cross support (6) and the back wheels (12) are mounted on guide rods (11,16) and each individually height adjustable by means of secondary drives (13).

2. Chassis according to claim 1 characterised in that a double-acting hydraulic cylinder (10) mutually supported fixed on the frame is attached to the front axle cross support (6) and can be locked and unlocked by valves and forms the locking device of the front axle cross support (6).

3. Chassis according to claim 1 or 2 characterised in that the height adjustment device of the back wheels (12) consists of the hydraulic cylinders mutually supported fixed on the frame and engaging on the guide rods (11,16).

4. Chassis according to claims 2 and 3 characterised in that the hydraulic cylinder (10) for the front axle cross support (6) and the hydraulic cylinders (13) for the guide rods (11,16) of the back wheels (12) are fitted with pressure sensors from which an alarm or setting signal is released when a corresponding drop in pressure occurs following a blow out of one of the front wheels (7) or back wheels (12).

5. Chassis according to one of claims 1 to 4 characterised in that the guide rods are cross rods, which swivel about axes (D) lying in the longitudinal direction of the chassis.

6. Chassis according to claim 5 characterised in that the cross rods (16) are each formed as double cross rods.

7. Chassis according to one of claims 1 to 4 characterised in that the guide rods are longitudinal rods (11) which can swivel about axes (C) lying in the transverse direction of the chassis.

8. Chassis according to one of claims 1 to 7 characterised in that the bearing point of the lifting gear (3) has a shorter distance from the back wheels (12) than from the front wheels (7).

9. Chassis according to one of claims 1 to 8 characterised in that the track widths of the back wheels (12) and front wheels (7) are substantially the same at least in the normal position.

10. Chassis according to one of claims 1 to 9 characterised in that the front wheels (7) and back wheels (12) in each position lie outside of the vertical projection of the working platform.

11. Chassis according to one of claims 1 to 10 characterised in that the individually suspended height-adjustable back wheels (12) can be driven by means of wheel motors.

## Revendications

1. Châssis pour une plateforme de travail aérienne, automobile comprenant un dispositif de levage, tel qu'un poteau à articulation (3), un dispositif en ciseaux ou autre système analogue, portant la plateforme de travail parallèlement à un plan de référence, en position normale: parallèlement à un plan horizontal, ainsi que des roues avant (7) et des roues arrière (12) et une traverse (6) de l'axe antérieur sur laquelle les roues avant (7) sont montées et laquelle pivote autour d'un axe (B) disposé dans le sens longitudinal du châssis et peut être fixée dans ses positions de pivotement,
caractérisé en ce que
les roues avant (7) sont orientables sur la traverse (6) et que les roues arrière (12) sont disposées individuellement sur des bras de braquage (11, 16) et sont individuellement réglables en hauteur à l'aide de commandes auxiliaires (13).

2. Châssis selon la revendication 1,
caractérisé en ce qu'un
cylindre hydraulique (10) à double effet, solidaire du châssis, est monté articulé, de son autre côté, sur la traverse (6) de l'axe antérieur, lequel cylindre hydraulique (10) peut être ouvert et fermé à l'aide de soupapes et forme le dispositif de verrouillage de la traverse (6) de l'axe antérieur.

3. Châssis selon la revendication 1 ou 2,
caractérisé en ce que
le dispositif de réglage en hauteur des roues arrière (12) est formé par les cylindres hydrauliques qui, fixés au châssis et montés, articulés, de l'autre côté, attaquent les bras de braquage (11, 16).

4. Châssis selon les revendications 2 et 3,
caractérisé en ce que
les cylindres hydrauliques (10) attaquant la traverse (6) de l'axe antérieur et les cylindres hydrauliques (13) attaquant les bras de braquage (11, 16) des roues arrière (12) sont équipés de capteurs de pression qui déclenchent un signal d'alarme ou de réglage lors d'une détention adéquate résultant de l'affaissement de l'une des roues avant (7) ou des roues arrière (12).

5. Châssis selon l'une des revendications 1 à 4,
caractérisé en ce que
les bras de braquage sont des bras transversaux pouvant pivoter sur des axes (D) s'étendant dans le sens longitudinal du châssis.

6. Châssis selon la revendication 5,
caractérisé en ce que
chaque bras de braquage (16) est conçu sous forme de double bras de braquage transversal.

7. Châssis selon l'une des revendications 1 à 4,
caractérisé en ce que
les bras de braquage sont des bras longitudinaux pouvant pivoter sur des axes (C) s'étendant dans le sens transversal du châssis.

8. Châssis selon l'une des revendications 1 à 7,
caractérisé en ce que
le support du dispositif de levage (3) est situé à une plus faible distance des roues arrière (12) que des roues avant (7).

9. Châssis selon l'une des revendications 1 à 8,
caractérisé en ce que
les voies des roues arrière (12) et des roues avant (7) sont sensiblement les mêmes, tout au moins en position normale.

10. Châssis selon l'une des revendications 1 à 9,
caractérisé en ce que
les roues avant (7) et les roues arrière (12) se trouvent, dans chaque position, en dehors de la projection verticale de la platteforme de travail

11. Châssis selon l'une des revendications 1 à 8,
caractérisé en ce que
les roues arrière (12), montées individuellement et réglables en hauteur, peuvent être entraînées par des moteurs à la roue.
